Europäisches Patentamt

European Patent Office

Office européen des brevets

(11) Veröffentlichungsnummer: **0 497 100 A2**

# EUROPÄISCHE PATENTANMELDUNG

(21) Anmeldenummer: **92100250.7**

(22) Anmeldetag: **09.01.92**

(51) Int. Cl.5: **C08L 25/02**, C08J 5/04, B29C 67/16

(30) Priorität: **26.01.91 DE 4102344**

(43) Veröffentlichungstag der Anmeldung:
**05.08.92 Patentblatt 92/32**

(84) Benannte Vertragsstaaten:
**AT BE CH DE DK ES FR GB IT LI NL SE**

(71) Anmelder: **BASF Aktiengesellschaft**
**Carl-Bosch-Strasse 38**
**W-6700 Ludwigshafen(DE)**

(72) Erfinder: **Dotzauer, Bernhard, Dr.**
**Woehlerstrasse 12 f**
**W-6701 Maxdorf(DE)**
Erfinder: **Beckerle, Wilhelm Friedrich**
**Beethovenstrasse 20 1/2**
**W-6712 Bobenheim-Roxheim(DE)**
Erfinder: **Wendel, Kurt, Dr.**
**Woehlerstrasse 26**
**W-6700 Ludwigshafen(DE)**
Erfinder: **Portugall, Michael, Dr.**
**Cuiserystrasse 4**
**W-6706 Wachenheim(DE)**
Erfinder: **Schwartz, Manfred, Dr.**
**Friesenstrasse 24**
**W-6700 Ludwigshafen(DE)**

(54) **Formkörper auf Basis von Fasern.**

(57) Formkörper auf Basis von Fasern (Komponente A), enthaltend als Bindemittel ein Polymerisat (B) mit einer Glastemperatur von über 60°C aus

$b_1$) 70 bis 99 Gew.%, bezogen auf B, wenigstens eines vinylaromatischen Monomeren,

$b_2$) 1 bis 30 Gew.%, bezogen auf B, Acrylestern oder Methacrylestern von 1 bis 18 C-Atome enthaltenden Alkoholen, Monohydroxyalkylacrylaten oder Monohydroxyalkylmethacrylaten mit 2 bis 12 C-Atomen im Alkylrest, Acrylsäure, Methacrylsäure, Acrylnitril und/oder Methacrylnitril, wobei die Summe der Mengen von Acrylnitril und Methacrylnitril bis zu 20 Gew.-%, bezogen auf B, betragen kann,

und

$b_3$) 0 bis 5 Gew.%, bezogen auf B, weiterer copolymerisierbarer Monomerer,

und dessen Herstellung.

EP 0 497 100 A2

Die Erfindung betrifft Formkörper auf Basis von Fasern (Komponente A), enthaltend als Bindemittel (B) ein Polymerisat mit einer Glastemperatur von über 60 °C aus

b$_1$) 70 bis 99 Gew.%, bezogen auf B, wenigstens eines vinylaromatischen Monomeren,

b$_2$) 1 bis 30 Gew.%, bezogen auf B, Acrylestern oder Methacrylestern von 1 bis 18 C-Atome enthaltenden Alkoholen, Monohydroxyalkylacrylaten oder Monohydroxyalkylmethacrylaten mit 2 bis 12 C-Atomen im Alkylrest, Acrylsäure, Methacrylsäure, Acrylnitril und/oder Methacrylnitril, wobei die Summe der Mengen von Acrylnitril und Methacrylnitril 0 bis 20 Gew.-%, bezogen auf B, beträgt,

und

b$_3$) 0 bis 5 Gew.%, bezogen auf B, weiterer copolymerisierbarer Monomerer.

Formkörper auf Basis von Mineralfasern sind an sich bekannt. So wird in DE-A 29 24 085, US-A 4 187 142 und US-A 4 189 345 ein Verfahren zur Herstellung von Faserplatten beschrieben, bei dem die Zuschlagstoffe zusammen mit dem - gegebenenfalls ausgefällten - Bindemittel auf einem Langsieb abfiltriert werden (sog. Blattbildung) und die Faserplatten anschließend bei erhöhter Temperatur getrocknet werden. In US-A 4 187 142 und US 4 189 345 werden Bindemittel aus einem kompliziert aufgebauten Kernschale-Latex beschrieben. An der Oberfläche der Latexteilchen sind größere Mengen an Vinylbenzylchlorid einpolymerisiert, das vor Einsatz des Latex mit Aminen umgesetzt werden muß. Diese Bindemittel, die nur mit einem bestimmten Coadditiv verwendet werden können, führen jedoch zu Formteilen mit hoher Wasseraufnahme.

Auf die oben beschriebene Weise stellt man beispielsweise aus Kaolin, Mineralfasern und Stärken Deckenplatten her. Der gravierende Nachteil solcher an sich sehr steifen Platten ist, daß sie in feuchten, besonders aber in feuchtwarmen Räumen - also unter tropischem Klima - ihre Form verlieren, d.h. sich unter ihrem Eigengewicht durchbiegen. Der optische Eindruck solcher durchbogener Decken ist häßlich und daher unerwünscht.

Ein weiterer Nachteil ist die Empfindlichkeit solcher Flächengebilde gegenüber dem Abbau des Bindemittels Stärke durch Mikroorganismen, was zu dunklen Flecken führt und letzlich die mechanische Festigkeit deutlich beeinträchtigt. Befallene Deckenplatten können ein Gesundheitsrisiko darstellen. Natürlich kann man solche Platten mit Microciden ausrüsten wie z.B. mit Formaldehyd-Depotstoffen. Diese gewährleisten durch allmähliche Abgabe von Formaldehyd einen Schutz gegen den Befall. Um aber einen langjährigen Schutz zu gewährleisten, muß man höhere Konservierungsmitteldosierungen wählen, die zu Geruchsbelästigungen und unter Umständen zu allergischen Reaktionen der Bewohner führen können.

Aus EP-A 367 023 sind Faserplatten bekannt, die Acrylatcopolymerisate enthalten. Diese können als wäßrige Lösung eingesetzt werden. Beim Einsatz dieser Bindersysteme in der Praxis hat sich jedoch gezeigt, daß einige Punkte noch verbesserungsfähig sind. So zeigt sich bei der Herstellung von Mineralfaserplatten auf dem Langsieb, daß die Viskosität der Polymerlösungen für übliche betriebliche Maßnahmen, wie z.B. Fördern und Dosieren, zu hoch ist. Die Viskosität von solchen ca. 10 %igen Polymerlösungen liegt bei etwa 25 Pas. Erst Lösungen mit Feststoffgehalten von deutlich unter 10 Gew.% können auf fast allen Anlagen problemlos eingesetzt werden, was durch die hohe Menge des Verdünnungsmittels Wasser unwirtschaftlich ist. Weiterhin neigen solche Polymerisate während der Trocknung der Rohplatten zum Migrieren, d.h. zu einer Bindemittelverarmung im Inneren der Mineralfaserplatten, was sich negativ auf die Weiterverarbeitung der Rohplatten auswirken kann. Dieser Bindemittelmigration weiß der Fachmann zwar durch den Einsatz von Stoffen mit inverser Löslichkeit, wie z.B. Polyvinylmethylether, zu begegnen. Sie verursachen aber zusätzliche Kosten und können die Feuchtigkeitsaufnahme der Endprodukte steigern.

Ähnliches gilt auch für die Acrylatbinder der DE-A 29 24 085 und EP-A 123 234.

Aus der EP-A 386 579 sind Formkörper bekannt, die mit Acrylatdispersionen gebunden werden. Die mit diesen Bindemitteln und denen der EP-A 367 023 hergestellten Formteile haben insgesamt befriedigende Eigenschaften, ihre mechanische Festigkeit und ihre Wasseraufnahme können jedoch noch verbessert werden. Eine Erhöhung der Wasserfestigkeit könnte mit einer höheren Dosierung von Hydrophobierungsmitteln geschehen, dabei muß man jedoch einen Rückgang der mechanischen Festigkeit sowie Benetzungs- und Verklebungsprobleme bei den Formteilen in Kauf nehmen.

Aus US-A 4 517 240 ist ein Verfahren bekannt, bei dem ein Faserbrei während des Temperns mit einer Acrylatdispersion und einem wasserlöslichen Acrylsiloxan behandelt wird. Nachteilig ist die Notwendigkeit des Einsatzes dieser Silane. Abgesehen von den zusätzlichen Kosten ist die Prozeßführung der Dosierung in der Praxis häufig nicht ganz einfach. Außerdem erhält man nur flexible Formteile.

BR-A 1 142 755 beschreibt ein butadienhaltiges Polymer, das zur Imprägnierung von Cellulosefaserplatten eingesetzt wird. Verwendet man ein solches Polymerisat als Bindemittel, so erhält man jedoch sehr flexible Formteile, die außerdem nicht alterungsbeständig sind.

Schließlich werden in EP-A 81 230 und JP-A 7 227 343 acrylnitrilreiche Polymerisate als Haftvermittler für Thermoplaste und für Glasfasern beschrieben. Der Einsatz dieser Polymerisate als Bindemittel in Faserplatten wird nicht nahegelegt.

Aufgabe der vorliegenden Erfindung war es, Formkörper auf Basis von Fasern bereitzustellen, die die oben geschilderten Nachteile vermeiden und eine geringe Wasseraufnahme mit hoher Steifigkeit kombinieren.

Demgemäß wurden die eingangs definierten Formkörper und ein Verfahren zu ihrer Herstellung gefunden. Bevorzugte Ausführungsformen sind den Unteransprüchen zu entnehmen.

Als Fasern kommen Mineralfasern in Betracht, z.B. Steinwolle, Basaltwolle, Schlackenwolle und Glasfasern mit Faserlängen von meist 0,2 bis 5, insbesondere 0,5 bis 2,5 cm und Dicken von etwa 1,7 bis 3,3 dtex. Auch organische Fasern kommen in Betracht. Dazu zählen in erster Linie Holzfasern wie zerkleinertes und/oder aufgeschlossenes Holz wie Kiefernholz. Solche Holzfasern werden üblicherweise aus Holzspänen, Hackschnitzeln oder Sägespänen hergestellt (z.B. Ullmann's Encyklopädie der technischen Chemie, 4. Aufl. Bd 12, S. 720ff). Den Holzfasern können in untergeordneten Mengen auch andere organische Fasern wie Cellulosefasern oder Fasern von synthetischen Polymerisaten wie Polypropylenfasern und/oder Polyacrylnitrilfasern im allgemeinen in Mengen von 5 bis 60, bevorzugt 15 bis 40 und insbesondere 15 bis 30 Gew.%, bezogen auf Holzfasern, zugesetzt sein. Diese Fasern haben üblicherweise eine Länge von 0,3 bis 1,5 cm und eine Dicke von 10 bis 30 dtex.

Das Polymerisat B wird im allgemeinen in Mengen von 5 bis 25, bevorzugt 5 bis 15 Gew.%, bezogen auf die Fasern A, eingesetzt. Es ist bevorzugt aus 75 bis 98 Gew.% $b_1$ und 2 bis 25 Gew.% $b_2$ aufgebaut.

Als vinylaromatische Monomere kommen solche mit bis zu 20 C-Atomen in Betracht wie Vinyltoluol, $\alpha$- und para-Methylstyrol, $\alpha$-Butylstyrol, 4-n-Butylstyrol, 4-n-Decylstyrol und vorzugsweise Styrol.

Als Monomere $b_2$ kommen Ester der Acryl- oder Methacrylsäure von 1 bis 18 C-Atome enthaltenden Alkoholen, bevorzugt Alkanolen in Frage. Als Alkohole seien genannt Methanol, Ethanol, n- oder i-Propanol, n-, s- und t-Butanol, n-Pentanol, Isoamylalkohol, n-Hexanol, Cyclohexanol, Octanol, 2-Ethylhexanol, Laurylalkohol, Stearylalkohol, Benzylalkohol und Vinylethanol.

Als Ester der Acryl- und Methacrylsäure seien genannt Hexyl(meth)acrylat, Lauryl(meth)acrylat, Cyclohexylacrylat, Phenylethylmethacrylat und n-, s- und t-Butyl(meth)acrylat, Benzylmethacrylat, Cyclohexylmethacrylat, Methylmethacrylat, Ethylmethacrylat und vor allem 2-Ethylhexylacrylat, Methylacrylat, Ethylacrylat und n-Butylacrylat.

Monohydroxyalkylacrylate oder -methacrylate sind beispielsweise 2-Hydroxyethylacrylat, Hydroxypropylacrylat und Hydroxybutylacrylat.

Als $b_3$ kommen in Frage Acrylamid, Methacrylamid, Maleinsäure, Fumarsäure, Itaconsäure, Glycidylmethacrylat sowie Monomere mit zwei mit $b_1$ copolymerisierbaren Doppelbindungen, die bevorzugt sauerstoffhaltig sind, wie Diallylphthalat, Butandioldiacrylat, Hexandioldiacrylat oder auch Divinylbenzol, Butadien oder Isopren. Von den 2 Doppelbindungen enthaltenden Monomeren werden bevorzugt 0 bis 2 Gew.-% eingesetzt. Gute Erfahrungen werden in manchen Fällen gemacht, wenn mindestens 0,1 Gew.-% $b_3$ eingesetzt werden.

Das Polymerisat B wird vorzugsweise durch radikalische Emulsionspolymerisation in wäßriger Phase hergestellt.

Batchverfahren oder Zulaufverfahren, in denen der Initiator und/oder die gegebenenfalls in Wasser emulgierten Monomeren während der Polymerisation portionsweise oder kontinuierlich zugegeben werden, können benutzt werden (siehe beispielsweise Encyclopaedia of Polymer Science and Engineering, Vol. 6 (1986) 1 bis 52). Die entstehenden wäßrigen Copolymerdispersionen haben meist eine Konzentration an Copolymer, d.h. einen Feststoffgehalt von 40 bis 60, in vielen Fällen 45 bis 55 Gew.%. Als Emulgiermittel werden meist 0,2 bis 3 Gew.-%, bezogen auf die eingesetzten Monomeren, die anionische und/oder nichtionische Emulgatoren, beispielsweise Natriumdialkylsulfolsuccinate, Natriumsalze von sulfatierten Ölen, Natriumsalze von Alkylsulfonsäuren, Natrium-, Kalium- und Ammoniumalkylsulfate, Alkalisalze von Sulfonsäuren, Fettsäuren, Fettalkohole, Fettamide und Alkylphenole, deren ethoxylierte und/oder sulfatierte Derivate, ferner Natriumsalze von Fettsäuren, wie Natriumstearat und Natriumoleat und sulfonierte Alkyldiphenylether verwendet.

Die pH-Werte der Polymerdispersionen liegen im Bereich von 3 bis 9, bevorzugt 4 bis 8,5. Die Polymerdispersionen sind meist niedrig-viskos, d.h. etwa 10 bis 25 mPas bei 23°C und einem Schergefälle von 280 $s^{-1}$. Die mittlere Teilchengröße liegt im Bereich von 100 bis 300, bevorzugt 100 bis 200 $\mu$m ($D_{50}$-Wert, Ultrazentrifuge, W. Maechtle, Makromolekulare Chemie 185 (1984), 1025).

Gute Erfolge werden erzielt, wenn das Polymerisat B eine Glasübergangstemperatur von 60 bis 150, bevorzugt 65 bis 110°C und insbesondere 75 bis 110°C aufweist.

Vorteilhaft für die Verarbeitung ist der niedrige Restmonomerengehalt der erfindungsgemäß eingesetzten Polymerisate, der meist deutlich unter 500 ppm, bezogen auf Dispersion, liegt. Dies bedeutet, daß die Arbeitsstoffkonzentration in der Luft am Arbeitsplatz außerordentlich niedrig ist und daß die Fertigartikel praktisch geruchsfrei sind.

Die Polymerisatdispersionen sind stabil gegenüber Scherkräften und können problemlos transportiert und mit geeigneten Pumpen gefördert werden. Trotzdem besitzen sie ein sehr günstiges Fällungsverhalten. Sie koagulieren mit dem in Mineralfaserwerken anzutreffenden Kreislauf- oder Prozeßwasser ohne weitere Zusätze, so daß vorteilhafterweise auf den Zusatz von Fällungsmitteln wie z.B. Aluminiumsulfat verzichtet werden kann. Bei der Herstellung von Holzformteilen kann es manchmal jedoch von Vorteil sein, die Koagulation der Polymerdispersionen durch kleine Dosen z.B. verdünnter wäßriger Aluminiumsulfatlösungen zu unterstützen.

Die erfindungsgemäßen Formkörper können neben den Bestandteilen A und B nichtfaserige Füllstoffe C enthalten. Es kann sich dabei um feuergetrocknete Sande, feinteilige Tone wie Kaolin oder Montmorrilonit, Feldspat, Kreide, Kieselgur und Glimmer handeln, die bevorzugt mit den Mineralfasern eingesetzt werden. Ihre Menge kann zwischen 20 und 80, vorzugsweise 30 und 60 Gew.%, bezogen auf die eingesetzten Fasern, betragen.

Zusätzlich können die Formkörper noch bis zu 10, vorzugsweise 1 bis 3 Gew.%, bezogen auf Fasern, übliche Brandschutzmittel wie Aluminiumsilikat, -hydroxid, Borate wie Natriumtetraborat und/oder Phosphate wie prim. Natriumphosphat enthalten.

Manchmal fügt man bei der Herstellung der Formkörper noch bis zu 5, vorzugsweise 1 bis 2 Gew.%, bezogen auf die Fasern, an üblichen Hydrophobierungsmitteln wie Silikone und/oder Wachse zu.

Weiterhin können noch Stärke wie Maisstärke oder Kartoffelstärke meist in Mengen von 1 bis 5 Gew.%, bezogen auf die Fasern, zugesetzt werden.

Auch bekannte Flockungshilfsmittel wie Polyacrylamide können in geringen Mengen vorhanden sein.

Die Formkörper können in verschiedenen Verfahren hergestellt werden.

Man kann beispielsweise aus den Fasern A, gegebenenfalls den Füllstoffen C und weiteren Zuschlägen unter Durchmischen eine wäßrige Suspension herstellen. Dabei oder danach wird das Polymerisat B vorteilhafterweise als wäßrige Dispersion zugesetzt. Man arbeitet im allgemeinen bei Raumtemperatur, also zwischen 15 und 35 ° C. Anschließend wird die Suspension im allgemeinen durch Zugabe von Flockungshilfsmitteln ausgeflockt. Die entstehende Mischung wird in eine Form gegeben und entwässert, was z.B. durch Absaugen und/oder Pressen geschehen kann. Der noch nasse Formkörper wird üblicherweise im Verlauf von 0,1 bis 5 Stunden bei 100 bis 250 ° C getrocknet. Dabei können Trockenschränke, Umlufttrockner, IR-Strahler oder Mikrowellenstrahler und/oder beheizbare Pressen verwendet werden.

Auch andere Herstellungsvarianten sind möglich. Man kann beispielsweise bei der Herstellung von Flächengebilden die Blattbildung auf dem Langsieb vornehmen und bei erhöhter Temperatur (ca. 70 bis 150 ° C) trocknen. Es ist auch möglich, nach der Blattbildung einen Verformungsprozeß vorzunehmen und erst dann bei erhöhter Temperatur zu trocknen. Weiterhin können alle Zuschlagstoffe im trockenen oder feuchten Zustand vermischt werden, was in einem Wirbelbett geschehen kann. Danach wird verformt und vorzugsweise in der Wärme getrocknet.

Andere, in der Praxis vielfach bewährte Herstellungsverfahren sind das Befeuchten der Fasern und gegebenenfalls weiterer Zuschlagstoffe durch Besprühen oder Tauchen mit nachfolgendem Abquetschen und anschließender Trocknung bei erhöhter Temperatur, wobei man durch mehr oder weniger starkes Pressen während der Trocknung die Raumgewichte solcher Flächengebilde einstellen kann.

Weiterhin kann man zunächst aus Fasern und gegebenenfalls Fäll- und Zuschlagstoffen einen Formkörper bilden, der dann anschließend mit der wäßrigen Dispersion des Polymerisates B imprägniert wird. Dieses Verfahren ist in der EP-A 386 579 beschrieben.

Dabei werden die Formgrundkörper in vorteilhafter Weise zunächst mit der wäßrigen Dispersion imprägniert, wobei eine allseitige Imprägnierung bevorzugt wird, und nach anschließendem Trocknen mit der pigmentierten Dispersion als Dekor beschichtet.

Um optisch ansprechende Beschichtungen zu erhalten, ist es dabei von Vorteil, die Gesamtbeschichtung in mehreren Arbeitsgängen durchzuführen und zwischen den einzelnen Arbeitsgängen die jeweils aufgetragene Schicht zu trocknen, wobei in der Regel Temperaturen von 100 bis 180 ° C angewendet werden. Das Verfahren kann mit besonderem Vorteil zur Herstellung von Schalldämmplatten mit in Gegenwart von Luftfeuchtigkeit verbesserter Formbeständigkeit eingesetzt werden, wobei die flächigen Formgrundkörper gegebenenfalls mit schallabsorbierenden Strukturen versehen sein können. Das Auftragen der erfindungsgemäßen Massen kann durch Sprühen, Rollen oder Gießen erfolgen, wobei die Oberfläche des Formgrundkörpers in der Regel zuvor abgeschliffen wird. Die aufgetragenen Mengen betragen im allgemeinen (gerechnet in Mengen M des in der Beschichtungs- oder Imprägnierungsmasse enthaltenen wasserfreien Copolymerisats) 2 bis 100 g/m².

Bei den erfindungsgemäßen im allgemeinen betonfreien Formkörpern handelt es sich insbesondere um Platten, d.h. quaderförmige Körper mit üblicherweise einem Verhältnis von Breite:Länge von 1:1 bis 1:5 und Höhe:Länge von 1:10 bis 1:100.

Beispiele sind Mineralfaserplatten oder Holzfaserplatten, die als Deckenplatten oder Schalldämmplatten verwendet werden können. Die Platten können auf ihrer Sichtfläche mit bekannten schallabsorbierenden Strukturen und in an sich bekannter Weise mit Dekorbeschichtungen versehen sein. Die auf diese Weise erhaltenen Schalldämm(decken)-Platten haben sehr gutes Dämmverhalten, sind sehr steif - auch in feuchtem Zustand - und geben die aufgenommene Feuchte sehr leicht wieder ab.

Überraschenderweise werden bei den erfindungsgemäßen Formkörpern die vorstehend aufgezeigten Nachteile vermieden. Obwohl es sich bei den Polymerisaten B um Thermoplaste handelt, erfüllen sie als Bestandteile der Formkörper alle Bindefunktionen der Duroplaste wie z.B. Steifigkeit. Überraschend ist ferner, daß die Polymeren die Steifigkeit der Formkörper auch in feuchter und warmer Atmosphäre gewährleisten, sogar wenn in begrenztem Umfang Stärke in den Formteilen vorhanden ist. Als weiteres Positivum kommt hinzu, daß die Polymeren sich leicht durch Emulsionspolymerisation herstellen lassen. Eine biozide oder fungizide Ausrüstung der Formkörper ist entbehrlich, da die Polymeren unter den Bedingungen der Herstellung und der Verwendung der Platten nicht abgebaut werden. Trotzdem bereitet die Entsorgung von Bindemittelresten und auch der damit hergestellten Formkörper keine Probleme. Die Polymerisate bilden mit mehrwertigen Ionen wie z.B. Calciumionen, Magnesiumionen oder Fe(III)ionen in Wasser unlösliche Verbindungen oder werden durch diese ausgefällt und können somit nicht ins Grundwasser gelangen. Die Calciumverbindungen adsorbieren sehr ausgeprägt an die Feststoffpartikel in Kläranlagen. Polymerisate, die nur aus Kohlenstoff, Wasserstoff und Sauerstoff aufgebaut sind, bieten in dieser Hinsicht besondere Vorteile.

In den folgenden Beispielen beziehen sich die Prozente und Teile auf das Gewicht, wenn nichts anderes angegeben ist.

Die Untersuchungen der beispielhaft hergestellten Platten wurden nach folgenden Methoden durchgeführt:

Dichte der Mineralfaserplatten

Prüfkörper werden mit den Maßen 250 mm x 50 mm ausgeschnitten. Die Dicke wird mit einer Schieblehre bestimmt und zur Berechnung des Volumens verwendet. Die Dichte wird in g/cm$^3$ als Mittelwert aus 2 Prüfkörpern berechnet.

Dichte der Holzfaserplatten

Kreisrunde Prüfkörper mit D = 9 mm werden mittels Stanzeisen ausgestanzt. Die Dicke wird mit einer Schieblehre gemessen, zur Volumenberechnung eingesetzt, und die Dichte in g/cm$^3$ als Mittelwert aus 3 Prüfkörpern berechnet.

Wasseraufnahme

Prüfkörper mit den Längsmaßen 250 mm x 50 mm werden unter Gewichtsbelastung 1 bzw. 2 Stunden bei Raumtemperatur unter Wasser gelagert. Die Gewichtszunahme wird nach sorgfältigem Abtupfen durch Wägen als Mittelwert aus jeweils 2 Prüfkörpern in Prozent der Gewichtszunahme bestimmt.

Formbeständigkeit (Maß für die Steifigkeit)

Man schleift mittels Bandschleifgerät Prüfkörper mit den Maßen 250 mm x 50 mm, bis diese 15 mm dick sind. Geschliffen wird auf der dem Sieb bei der Blattbildung abgewandten Seite.

Die so gewonnenen Prüfkörper werden in einem Klima von 38°C und 95 % relativer Luftfeuchte flachseitig nahe den Endkanten waagrecht aufgelegt und in der Mitte mit einem 1 kg-Gewicht belastet, so daß sich die Belastung auf die Gesamtlänge des Prüfkörpers auswirkt. Die Durchbiegung des Prüfkörpers wird im entlasteten Zustand gemessen und so ein Anhaltspunkt für das Langzeitverhalten von Mineralfaserplatten ermittelt.

Reißkraft

Die Reißkraft wird nach DIN 53 455 ermittelt.

Gemäß der folgenden allgemeinen Vorschrift wurden die in den Beispielen als Bindemittel verwendeten Polymerisatdispersionen B hergestellt:
Die Dispersionen wurden durch wäßrige radikalische Emulsionspolymerisation aus den Monomeren, die mit Hilfe der Emulgatoren in der Hälfte des Ansatzwassers emulgiert waren, unter Verwendung von 0,5 Gew.-%, bezogen auf die Monomeren, Natriumperoxodisulfat als Initiator in Form einer 2,5 gew.-%igen wäßrigen Lösung bei 80°C hergestellt. Dazu wurde die Hälfte des Ansatzwassers vorgelegt und unter Rühren bei Polymerisationstemperatur 10 Gew.-% der Initiatorlösung zugegeben. Anschließend wurden die Monomeremulsion innerhalb von 2 Stunden und die Initiatorlösung innerhalb von 2,5 Stunden dem Polymerisationsgefäß unter Rühren kontinuierlich zugeführt. Zur Nachpolymerisation wurde nach 2 Stunden bei Polymerisationstemperatur gerührt und dann in bekannter Weise aufgearbeitet. Die Menge des Ansatzwassers wurde so bemessen, daß die angegebenen Feststoffgehalte erzielt wurden.

Die bei den Beispielen 3 bis 8 als Emulgatoren genannten Fettsäuresalze wurden in situ durch Neutralisation der korrespondierenden Carbonsäuren mit Natronlauge hergestellt. Durch Zugabe der Monomeren und gegebenenfalls Wasser beziehungsweise der anderen Emulgatoren wurden die Monomeremulsionen hergestellt. Bei diesen Beispielen wurden weiterhin ein Drittel des Ansatzwassers vorgelegt und zwei Drittel für die Monomeremulsion verwendet. Ansonsten wurde wie oben beschrieben gearbeitet.

Die Glastemperaturen Tg wurden durch Differentialthermoanalyse (DTA) nach ASTM D 3418-82 ("midpoint temperature") bestimmt.

Beispiel 1

Bindemittel: 52,4 %ige wäßrige Dispersion eines Polymerisats aus
98 Gew.-% Styrol
2 Gew.-% Acrylsäure
Tg: 102°C
Emulgator: 1,25 % $C_{12}$-$C_{15}$-Natriumalkylsulfonat
pH-Wert: 3,1
Man stellt unter schonendem Rühren eine Suspension aus
235 g Basaltwolle
80 g Kaolin
18 g Aluminiumhydroxid
38 g der o.g. Polymerdispersion
3 g einer handelsüblichen ca. 35 %igen Polysiloxandispersion zur Hydrophobierung
in 6 l Prozeßwasser her. Hierzu benötigt man etwa 3 Minuten. Durch Zugabe von 4,5 g einer 10 %igen wäßrigen Lösung eines Polymerisats aus 70 Gew.-% Acrylamid und 30 Gew.-% Diethylaminoethylacrylat wird diese Suspension geflockt. Den so erhaltenen Faserbrei gießt man in einen Siebkasten mit einer Siebfläche von 25 cm x 25 cm und verteilt ihn gleichmäßig mit einem Holzspatel. Unter leichtem Unterdruck und vorsichtigem Pressen mit einem Stempel (25 cm x 25 cm, Druck höchstens 0,1 bar) wird die Faserbreischicht entwässert, wozu man höchstens 0,5 Minuten benötigt.

Man erhält eine etwa 18 mm dicke Rohplatte mit einer Restfeuchte von im Mittel 60 %. Die Rohplatte wird auf silikonisiertem Papier im Umlufttrockenschrank bei 180°C im Verlauf von 2,5 h getrocknet.

Eigenschaften der Mineralfaserplatte

Dichte:
0,35 g/cm$^3$
Wasseraufnahme nach 1 h:
6,1 %
nach 2 h:
6,5 %
Formbeständigkeit:
weniger als 1 mm nach 290 h.

Beispiel 2

Bindemittel: 29,8 %ige wäßrige Dispersion eines Polymerisats aus
90 Gew.-% Styrol
10 Gew.-% Methacrylsäure
Tg: 107°C
Emulgator: 1,9 % $C_{12}$-$C_{15}$-Natriumalkylsulfonat
pH-Wert: 3,2
Arbeitsweise gemäß Beispiel 1
Eingesetzt:
245 g Basaltwolle
90 g Kaolin
13 g Aluminiumhydroxid
44 g o.g. Polymerdispersion
Flockungs- und Hydrophobierungsmittel gemäß Beispiel 1.

Eigenschaften:

Dichte:
0,32 g/cm$^3$
Wasseraufnahme nach 1 h:
4,1 %
nach 2 h:
5,9 %
Formbeständigkeit:
weniger als 1 mm nach 289 h.

Beispiel 3

Bindemittel: 49,7 %ige wäßrige Dispersion eines Polymerisats aus
90 Gew.-% Styrol
10 Gew.-% Ethylacrylat
Tg: 93°C
Emulgator: 2,2 % Natriumlaurat
pH-Wert: 8,2
Eingesetzt:
235 g Schlackenwolle
80 g Kaolin
20 g Aluminiumhydroxid
48 g der o.g. Polymerdispersion
Arbeitsweise, Flockungs- und Hydrophobierungsmittel gemäß Beispiel 1.

Eigenschaften:

Dichte:
0,31 g/cm$^3$
Wasseraufnahme nach 1 h:
4,3 %
nach 2 h:
5,8 %
Formbeständigkeit:
weniger als 1 mm nach 290 h.

Beispiel 4

Bindemittel: 45,3 %ige wäßrige Dispersion eines Polymerisats aus
86 Gew.-% Styrol
10 Gew.-% Methacrylat
4 Gew.-% Hydroxiethylacrylat
Tg: 89°C
Emulgator: 2 % Natriumoleat
pH-Wert: 7,8
Eingesetzt:
220 g Schlackenwolle
120 g Kaolin
12 g Aluminiumhydroxid
43 g o.g. Polymerdispersion
Arbeitsweise, Flockungs- und Hydrophobierungsmittel gemäß Beispiel 1.

Eigenschaften:

Dichte:
0,35 g/cm$^3$
Wasseraufnahme nach 1 h:
5,8 %
nach 2 h:
6,5 %
Formbeständigkeit:
weniger als 1 mm nach 270 h.

Beispiel 5

Man stellt unter gutem Rühren eine Suspension von Fasern in 6 l Wasser her. Hierzu benötigt man etwa 3 Minuten. Der nächste Schritt ist die Zugabe der Bindemitteldispersion, gefolgt von einem Fällungsmittel wie z.B. Aluminiumsulfat. Ebenfalls unter Rühren erfolgt der Zusatz von 4,5 g einer 10 %igen wäßrigen Lösung eines Polymerisats auf 70 Gew.-% Acrylamid und 30 Gew.-% Diethylaminoethylacrylat als Flockungsmittel.

Zur Blattbildung gießt man den Faserbrei in einen Siebkasten mit der Siebfläche von 25 cm x 25 cm und verteilt die Masse gleichmäßig mit einem Holzspatel. Unter leichtem Unterdruck wird nun die Masse entwässert. Unter leichtem Pressen (weniger als 0, 1 bar) mit einem Stempel (25 cm x 25 cm) und vorsichtigem Absaugen erhält man feuchte Rohplatten, die meist 8 bis 9 mm dick sind und ca. 60 % Wasser enthalten.

Die Rohplatten trocknet man in einem Mikrowellenherd auf Restfeuchten von 10 bis 15 % und anschließend in einer beheizten Presse bei 220°C und 50 kp/cm$^2$ über 90 s.
Bindemittel: 49,8 %ige wäßrige Dispersion eines Polymerisats aus
75 Gew.-% Styrol
25 Gew.-% n-Butylacrylat
Tg: 69°C
Emulgator: 1,9 % Natriumoleat
pH-Wert: 8,0

Eingesetzt:
100 g Holzfasern
8 g Cellulosefasern
17 g Polypropylenfasern
15 g 8 %ige Emulsion von Stearyldiketen (Hydrophobierungsmittel)
19 g o.g. Polymerdispersion
7,5 g wäßrige 10 %ige Aluminiumsulfatlösung
4,5 g Flockungsmittel

Eigenschaften:

Dichte:
0,83 g/cm$^3$
Wasseraufnahme nach 1 h:
5,3 %
nach 2 h:
7,1 %
Reißkraft:
9 N/mm$^2$

Beispiel 6

Bindemittel: 46,7 %ige wäßrige Dispersion eines Polymerisats aus
80 Gew.-% Styrol
10 Gew.-% Acrylnitril
10 Gew.-% Methylacrylat
Tg: 92°C
Emulgator: 3,0 % Natriumlaurat
pH-Wert: 8,5
Eingesetzt:
6 l Prozeßwasser
100 g Holzfasern
10 g Cellulosefasern
10 g Polypropylenfasern
18 g o.g. Polymerdispersion
4,5 g Flockungsmittel wie in Beispiel 5
(kein Hydrophobierungsmittel und Fällungsmittel)

Eigenschaften:

Dichte:
0,80 g/cm$^3$
Wasseraufnahme nach 1 h:
5,5 %
nach 2 h:
6,3 %
Reißkraft:
12 N/mm$^2$

Beispiel 7

Bindemittel: 48,1 %ige wäßrige Dispersion eines Polymerisats aus
80 Gew.-% Styrol
20 Gew.-% Acrylnitril
Tg: 103°C

Emulgator: 2,5 % Natriumoleat
pH-Wert: 8,5
Eingesetzt:
6 l Prozeßwasser
100 g Holzfasern
20 g Polyacrylnitrilfasern
18 g o.g. Polymerdispersion
4,5 g Flockungsmittel wie in Beispiel 5
(kein Hydrophobierungsmittel und Fällungsmittel)

Eigenschaften:

Dichte:
0,78 g/cm$^3$
Wasseraufnahme nach 1 h:
4,4 %
nach 2 h:
5,4 %
Reißkraft:
15 N/mm$^2$

Beispiel 8

Bindemittel: 45,8 %ige wäßrige Dispersion eines Polymerisats aus
80 Gew.-% Styrol
20 Gew.-% Methylacrylat
Tg: 84°C
Emulgator: 4,5 % Natriumlaurat
pH-Wert: 7,8
Eingesetzt:
6 l Prozeßwasser
105 g Holzfasern
15 g Cellulosefasern
15 g Polypropylenfasern
16 g o.g. Polymerdispersion
6 g Aluminiumsulfatlösung 10 %ig
4,5 g Flockungsmittel wie in Beispiel 5
(kein Hydrophobierungsmittel)

Eigenschaften:

Dichte:
0,79 g/cm$^3$
Wasseraufnahme nach 1 h:
5,1 %
nach 2 h:
5,9 %
Reißkraft:
14 N/mm$^2$

Vergleichsbeispiel 1

Bindemittel: 29,7 %ige wäßrige Dispersion eines Polymerisats aus
67,5 Gew.-% Styrol
30 Gew.-% n-Butylacrylat
2,5 Gew.-% N-Methylolacrylamid

Tg: 43°C
Emulgator: 1,4 % Na-Salz eines Fettalkoholethoxilat-Schwefelsäurehalb esters (EO-Grad: 2)
pH-Wert: 2,3
Eingesetzt:
220 g Schlackenwolle
120 g Kaolin
12 g Aluminiumhydroxid
66 g o.g. Polymerdispersion
Arbeitsweise, Flockungs- und Hydrophobierungsmittel gemäß Beispiel 1.

Eigenschaften:

Dichte:
0,33 g/cm$^3$
Wasseraufnahme nach 1 h:
5,6 %
nach 2 h:
7,2 %
Formbeständigkeit:
Bruch innerhalb von 8 h.

Vergleichsbeispiel 2

Bindemittel: Polymerdispersion aus Vergleichsbeispiel 1
Eingesetzt:
100 g Holzfasern
8 g Cellulosefasern
17 g Polypropylenfasern
15 g 8 %ige Emulsion von Stearyldiketen (Hydrophobierungsmittel)
34 g o.g. Polymerdispersion
7,5 g wäßrige 10 %ige Aluminiumsulfatlösung
4,5 g Flockungsmittel
Arbeitsweise gemäß Beispiel 5.

Eigenschaften:

Dichte:
0,77 g/cm$^3$
Wasseraufnahme nach 1 h:
46,0 %
nach 2 h:
57,7 %
Reißkraft:
< 1 N/mm$^2$

Beispiel 9

Bindemittel: 29,1 %ige wäßrige Dispersion eines Polymerisats aus
93,2 Gew.-% Styrol
5,0 Gew.-% Butadien
1,8 Gew.-% Na-Salz der Methacrylsäure
Tg: 93°C

Emulgator: 1,5 % Na-Salz eines Fettalkoholethoxilat-Schwefelsäurehalbesters (EO-Grad: 2)
pH-Wert: 8,6
Eingesetzt:
220 g Schlackenwolle
120 g Kaolin
12 g Aluminiumhydroxid
67 g o.g. Polymerdispersion
Arbeitsweise, Flockungs- und Hydrophobierungsmittel gemäß Beispiel 1.

Eigenschaften:

Dichte:
0,34 g/cm$^3$
Wasseraufnahme nach 1 h:
4,0 %
nach 2 h:
6,9 %

Vergleichsbeispiel 3

Bindemittel: 28,7 %ige wäßrige Dispersion eines Polymerisats aus
85,6 Gew.-% Styrol
12,8 Gew.-% Butadien
1,6 Gew.-% Na-Salz der Methacrylsäure
Tg: 84°C
Emulgator: 1,5 % Na-Salz eines Fettalkoholethoxilat-Schwefelsäurehalbesters (EO-Grad: 2)
pH-Wert: 8,4
Eingesetzt:
220 g Schlackenwolle
120 g Kaolin
12 g Aluminiumhydroxid
66 g o.g. Polymerdispersion
Arbeitsweise, Flockungs- und Hydrophobierungsmittel gemäß Beispiel 1.

Eigenschaften:

Dichte:
0,31 g/cm$^3$
Wasseraufnahme nach 1 h:
16,6 %
nach 2 h:
23,2 %

Vergleichsbeispiel 4

Bindemittel: 30 %ige Dispersion eines Polymerisats aus
70 Gew.-% Styrol
30 Gew.-% Acrylnitril
Tg: 87°C
Emulgator: 1,5 % Na-Salz eines Fettalkoholethoxilat-Schwefelsäurehalbesters (EO-Grad: 2)
pH-Wert: 2,8
Eingesetzt:
220 g Schlackenwolle
120 g Kaolin
12 g Aluminiumhydroxid
65 g o.g. Polymerdispersion
Arbeitsweise, Flockungs- und Hydrophobierungsmittel gemäß Beispiel 1.

Eigenschaften:

Dichte:
0,33 g/cm$^3$
Wasseraufnahme nach 1 h:
27,5 %
nach 2 h:
42,1 %
Formbeständigkeit:
Bruch innerhalb von 8 h.

Vergleichsbeispiel 5

Bindemittel: Wie in Vergleichsbeispiel 4
Eingesetzt:
6 l Prozeßwasser
100 g Holzfasern
10 g Cellulosefasern
10 g Polypropylenfasern
29 g o.g. Polymerdispersion
4,5 g Flockungsmittel wie in Beispiel 5
(kein Hydrophobierungsmittel und Fällungsmittel)
Arbeitsweise sonst gemäß Beispiel 5.

Eigenschaften:

Dichte:
0,67 g/cm$^3$
Wasseraufnahme nach 1 h:
148 %
nach 2 h:
>> 148 %
Reißkraft:
0,1 N/mm$^2$

Vergleichsbeispiel 6

Bindemittel: 29,5 %ige Dispersion eines Polymerisats aus
40 Gew.-% Styrol
60 Gew.-% Ethylmethacrylat
Tg: 78°C
Emulgator: 1,4 % Na-Salz eines Fettalkoholethoxilat-Schwefelsäurehalbesters (EO-Grad: 2)
pH-Wert: 2,9
Eingesetzt:

220 g Schlackenwolle
120 g Kaolin
12 g Aluminiumhydroxid
66 g o.g. Polymerdispersion
Arbeitsweise, Flockungs- und Hydrophobierungsmittel gemäß Beispiel 1.

Eigenschaften:

Dichte:
0,29 g/cm$^3$
Wasseraufnahme nach 1 h:
31,3 %
nach 2 h:
49,3 %
Formbeständigkeit:
Bruch innerhalb von 8 h.

Vergleichsbeispiel 7

Bindemittel: Wie in Vergleichsbeispiel 6
Eingesetzt:
100 g Holzfasern
8 g Cellulosefasern
17 g Polypropylenfasern
15 g 8 %ige Emulsion von Stearyldiketen (Hydrophobierungsmittel)
32 g o.g. Polymerdispersion
7,5 g wäßrige 10 %ige Aluminiumsulfatlösung
4,5 g Flockungsmittel
Arbeitsweise wie in Beispiel 5.

Eigenschaften:

Dichte:
0,65 g/cm$^3$
Wasseraufnahme nach 1 h:
93,2 %
nach 2 h:
154,5 %
Reißkraft:
0,1 N/mm$^2$

Vergleichsbeispiel 8

Bindemittel: 30,5 %ige wäßrige Dispersion eines Polymerisats aus
80 Gew.-% Methylmethacrylat
10 Gew.-% n-Butylacrylat
10 Gew.-% Methacrylsäure
Tg: 88°C
Emulgator: 1,4 % Na-Salz eines Fettalkoholethoxilat-Schwefelsäurehalbesters (EO-Grad: 2)
pH-Wert: 2,1
Eingesetzt:
220 g Schlackenwolle
120 g Kaolin

12 g Aluminiumhydroxid
64 g o.g. Polymerdispersion
Arbeitsweise, Flockungs- und Hydrophobierungsmittel gemäß Beispiel 1.

Eigenschaften:

Dichte:
0,29 g/cm$^3$
Wasseraufnahme nach 1 h:
20,9 %
nach 2 h:
84,6 %
Formbeständigkeit:
Bruch innerhalb von 8 h.

Vergleichsbeispiel 9

Bindemittel: 30,2 %ige wäßrige Dispersion eines Polymerisats aus
89,5 Gew.-% Methylmethacrylat
10 Gew.-% n-Ethylmethacrylat
0,5 Gew.-% Methacrylsäure
Tg: 97°C
Emulgator: 1,4 % Na-Salz eines Fettalkoholethoxilat-Schwefelsäurehalbesters (EO-Grad: 2)
pH-Wert: 2,7
Eingesetzt:
220 g Schlackenwolle
120 g Kaolin
12 g Aluminiumhydroxid
65 g o.g. Polymerdispersion
Arbeitsweise, Flockungs- und Hydrophobierungsmittel gemäß Beispiel 1.

Eigenschaften:

Dichte:
0,29 g/cm$^3$
Wasseraufnahme nach 1 h
: 37,6 %
nach 2 h:
47,8 %
Formbeständigkeit:
Bruch innerhalb von 8 h.

Vergleichsbeispiel 10

Bindemittel: Wie in Vergleichsbeispiel 8
Eingesetzt:
100 g Holzfasern
8 g Cellulosefasern
17 g Polypropylenfasern
15 g 8 %ige Emulsion von Stearyldiketen (Hydrophobierungsmittel)
31 g o.g. Polymerdispersion
7,5 g wäßrige 10 %ige Aluminiumsulfatlösung

4,5 g Flockungsmittel
Arbeitsweise gemäß Beispiel 5.

Eigenschaften:

 Dichte:
 0,71 g/cm$^3$
 Wasseraufnahme nach 1 h:
 14,5 %
 nach 2 h:
 17,0 %

**Vergleichsbeispiel 11**

 Wie Vergleichsbeispiel 10, jedoch Bindemittel wie in Vergleichsbeispiel 9.

Eigenschaften:

 Dichte:
 0,77 g/cm$^3$
 Wasseraufnahme nach 1 h:
 12,3 %
 nach 2 h:
 16,8 %

**Patentansprüche**

1. Formkörper auf Basis von Fasern (Komponente A), enthaltend als Bindemittel ein Polymerisat (B) mit einer Glastemperatur von über 60°C aus
  b$_1$) 70 bis 99 Gew.%, bezogen auf B, wenigstens eines vinylaromatischen Monomeren,
  b$_2$) 1 bis 30 Gew.%, bezogen auf B, Acrylestern oder Methacrylestern von 1 bis 18 C-Atome enthaltenden Alkoholen, Monohydroxyalkylacrylaten oder Monohydroxyalkylmethacrylaten mit 2 bis 12 C-Atomen im Alkylrest, Acrylsäure, Methacrylsäure, Acrylnitril und/oder Methacrylnitril, wobei die Summe der Mengen von Acrylnitril und Methacrylnitril bis zu 20 Gew.-%, bezogen auf B, betragen kann,
 und
  b$_3$) 0 bis 5 Gew.%, bezogen auf B, weiterer copolymerisierbarer Monomerer.

2. Formkörper nach Anspruch 1 in Form einer Platte.

3. Formkörper nach Anspruch 1 oder 2, enthaltend 5 bis 25 Gew.-%, bezogen auf A, des Bindemittels B.

4. Formkörper nach den Ansprüchen 1 bis 3, dadurch gekennzeichnet, daß man als Komponente A Mineralfasern einsetzt.

5. Formkörper nach den Ansprüchen 1 bis 3, dadurch gekennzeichnet, daß man als Komponente A organische Fasern einsetzt.

6. Formkörper nach den Ansprüchen 1 bis 5, enthaltend 20 bis 80 Gew.-%, bezogen auf A, an Füllstoffen.

7. Verfahren zur Herstellung von Formkörpern gemäß den Ansprüchen 1 bis 6, dadurch gekennzeichnet, daß man eine wäßrige, die Fasern A enthaltende Suspension unter Verwendung einer wäßrigen Dispersion von B herstellt, diese Suspension anschließend ausflockt, den entstandenen Faserbrei formt und trocknet.

**Patentansprüche für folgenden Vertragsstaat : ES**

1. Verfahren zur Herstellung von Formkörpern, dadurch gekennzeichnet, daß man eine wäßrige, Fasern A enthaltende Suspension unter Verwendung einer wäßrigen Dispersion eines Polymerisats B mit einer Glastemperatur über 60°C herstellt, diese Suspension anschließend ausflockt und den entstehenden Faserbrei formt und trocknet, wobei das Polymerisat B in polymerisierter Form aus
  b$_1$) 70 bis 99 Gew.%, bezogen auf B, wenigstens eines vinylaromatischen Monomeren,
  b$_2$) 1 bis 30 Gew.%, bezogen auf B, Acrylestern oder Methacrylestern von 1 bis 18 C-Atome enthaltenden Alkoholen, Monohydroxyalkylacrylaten oder Monohydroxyalkylmethacrylaten mit 2 bis 12 C-Atomen im Alkylrest, Acrylsäure, Methacrylsäure, Acrylnitril und/oder Methacrylnitril, wobei die Summe der Mengen von Acrylnitril und Methacrylnitril bis zu 20 Gew.-%, bezogen auf B, betragen kann,
 und
  b$_3$) 0 bis 5 Gew.%, bezogen auf B, weiterer copolymerisierbarer Monomerer.
 aufgebaut ist.

2. Verfahren nach Anspruch 1, dadurch gekennzeichnet, daß der Faserbrei zu einer Platte geformt wird.

3. Verfahren nach Anspruch 1 oder 2, dadurch gekennzeichnet, daß, bezogen auf A, 5 bis 25 Gew.-% B verwendet werden.

4. Verfahren nach den Ansprüchen 1 bis 3, dadurch gekennzeichnet, daß man als Komponente A Mineralfasern umsetzt.

5.  Verfahren nach den Ansprüchen 1 bis 3, dadurch gekennzeichnet, daß man als Komponente A organische Fasern einsetzt.

6.  Verfahren nach den Ansprüchen 1 bis 5, dadurch gekennzeichnet, daß, bezogen auf A, 20 bis 80 Gew.-% Füllstoffe verwendet werden.